# EUROPÄISCHE PATENTSCHRIFT

(11) **EP 3 507 521 B1**
(45) Veröffentlichungstag und Bekanntmachung des Hinweises auf die Patenterteilung: **17.07.2024**
(21) Anmeldenummer: 17768682.1
(22) Anmeldetag: 30.08.2017
(51) Int. Cl.: F16G 13/16, H02G 11/00

(54) **LEITUNGSFÜHRUNGSEINRICHTUNG**
LINE-GUIDING APPARATUS
DISPOSITIF DE GUIDAGE DE LIGNES DE TRANSPORT D'ÉNERGIE

(30) Priorität: 01.09.2016 DE 202016104838 U
(43) Veröffentlichungstag der Anmeldung: 10.07.2019
(73) Patentinhaber: Igus GmbH, 51147 Köln (DE)
(72) Erfinder: MORITZ, Simon, 50996 Köln (DE); NEHRING, Harald, 53229 Bonn (DE)
(74) Vertreter: Lippert Stachow Patentanwälte Rechtsanwälte
(86) Internationale Anmeldenummer: PCT/EP2017/071689
(87) Internationale Veröffentlichungsnummer: WO 2018/041852

(56) Entgegenhaltungen:
- WO-A1-2005/098267
- CN-U- 204 407 844
- DE-U1- 29 806 969
- DE-U1- 8 124 929
- US-A1- 2012 311 990
- US-B1- 7 552 581

## Beschreibung

Die Erfindung betrifft eine Leitungsführungseinrichtung, die als Energieführungskette zur Aufnahme und Führung von Energieleitungen zwischen einem ortsfest anordenbaren Anschlussglied und einem beweglichen Anschlussglied ausgebildet ist, deren Glieder jeweils zwei gegenüberliegende Seitenteile aufweisen, die bei zumindest einigen der Glieder durch Querstege miteinander verbunden sind, wobei sich anschließende Seitenteile unmittelbar benachbarter Glieder Gelenkverbindungen aufweisen, und wobei die Energieführungskette mindestens eine Schleife bildend anordenbar ist, wobei die Schleife ein erstes, zum ortsfest anordenbaren Anschlussglied über den Verlauf der Leitungsführungseinrichtung näher liegendes Trum und ein zweites, zum ortsfest anordenbaren Anschlussglied über den Verlauf der Leitungsführungseinrichtung entfernter liegendes Trum aufweist, die durch einen bogenförmigen Verbindungsbereich miteinander verbunden sind, wobei die Trume und der Verbindungsbereich einen zwischen den beiden Anschlussgliedern durchgängigen Raum zur Aufnahme der Energieleitungen aufweisen und der Verbindungsbereich zumindest in der Ebene, in der die Trume angeordnet sind, über einen Aufspreizwinkel >0° biegbar ist, wobei der Verbindungsbereich (7) so ausgebildet ist oder dass eine Vorrichtung vorgesehen ist, die bewirkt, dass im aufgespreizten Zustand der Trume (5, 6), bei dem der Verbindungsbereich (7) aufgebogen ist, eine Rückstellkraft erzeugt wird, durch die die Trume (5, 6) in ihre zusammengefaltete Lage zurückbewegbar sind.

Die Erfindung betrifft weiterhin eine Leitungsführungseinrichtung der oben genannten Art und eine Basis zur gleitenden Führung der Leitungsführungseinrichtung.

Derartige Leitungsführungseinrichtungen dienen dazu, Energieleitungen, wie z. B. elektrische Leitungen, Lichtleiter und hydraulische Schläuche, und/oder Daten von einer relativ ortsfesten Quelle zu einem Verbraucher bei dessen Bewegungen kontrolliert zu führen. Sie werden insbesondere im Maschinenbau bei allen möglichen Fertigungs-, Bearbeitungs- und Fördergeräten und -anlagen eingesetzt.

In der Regel ist der Aktionsbereich eines Verbrauchers mit einer Leitungsführungseinrichtung der eingangs genannten Art beschränkt, da eine kontrollierte Führung von Energieleitungen nur bestimmte Bewegungsabläufe des Verbrauchers zulässt. Bei größeren Aktionsbereichen sind Führungsvorrichtungen für die Leitungsführungseinrichtung zum kontrollierten Bewegungsablauf und meist mehrere hintereinander geschaltete Leitungsführungseinrichtungen mit solchen Führungsvorrichtungen erforderlich, wodurch ebenfalls der Aktionsbereich eingeschränkt wird. Insbesondere ist bei größeren Aktionsbereichen, in denen sich der Verbraucher weitgehend frei bewegen kann, die kontrollierte Führung der Energieleitungen bei Bewegung des beweglichen Anschlussgliedes zum ortsfest angeordneten Anschlussglied hin ein Problem.

Dieses Problem besteht vor allem bei hochkomplizierten Fertigungs- und Bearbeitungsprozessen wie zum Beispiel beim Spritzlackieren von größeren komplex geformten Geräten wie Flugzeugen. Das Spritzlackieren erfolgt in der Regel in Portalhallen, in denen durch Hallenkrane Portale bzw. Plattformen, von denen aus die Spritzlackierung erfolgt, sowohl vertikal als auch horizontal verfahrbar sind. Mehrere hintereinander geschaltete Leitungsführungseinrichtungen, die kontrolliert einzelnen Bewegungsabläufen folgen, versorgen das Portal bzw. die Plattform mit Energie.

Soll anstelle eines Hallenkrans eine auf dem Boden der Halle selbstfahrende Arbeitsbühne verwendet werden, von der aus die Lackierung vorgenommen werden kann und die über einen großen Aktionsbereich verfügen muss, so stellt sich hier das Problem einer geeigneten Leitungsführungseinrichtung, die der Arbeitsbühne kontrolliert und frei von Hindernissen, wie Führungsvorrichtungen und Zwischenstationen, über diesen großen Aktionsbereich folgen kann.

Eine Leitungsführungseinrichtung der eingangs genannten Art ist aus der US 7,552,581 B1 bekannt. Die durch dieses Dokument offenbarte Vorrichtung zur Erzeugung einer Rückstellkraft, durch die die beiden Trume in ihre zusammengefaltete Lage zurückbewegbar sind, weist eine sich innenseitig längs des Verbindungsbereichs und dem jeweils daran anschließenden Glied der beiden Trume einer Schleife erstreckende Blattfeder auf. Die Blattfeder ist in ihren beiden Endbereichen jeweils mit einem sich längs erstreckenden Langloch versehen, in das ein am jeweiligen Glied angeordneter und nach innen weisender Stift eingreift und in dem Langloch beim Aufspreizen der beiden Trume der Schleife geführt wird. Beim Aufspreizen der Trume wird die Blattfeder aus ihrem gekrümmten unbelasteten Zustand nach außen gebogen, wodurch eine Rückstellkraft zum Zusammenfalten der beiden Trume erzeugt wird.

Gemäß diesem Dokument weisen zumindest einige Glieder des vom ortsfesten Anschlussglied entfernteren Trums der Schleife Begrenzungsmittel auf, die ein Verschwenken der Glieder aus ihrer gestreckten Anordnung nach außen ermöglichen und, da die Glieder nur in einer Richtung abwinkelbar sein sollen, nach innen blockieren.

Auch aus der US 2012/0311990 A1 geht eine Leitungsführungseinrichtung der eingangs genannten Art hervor. Die Vorrichtung zur Erzeugung einer Rückstellkraft, die ein Zusammenfalten der durch einen bogenförmigen Verbindungsbereich miteinander verbundenen Trume einer Schleife bewirken soll, ist hier als eine oder mehrere Federklemmen ausgebildet, deren Enden innenseitig an Gliedern des Verbindungsbereichs oder der Trume angreifen. Dazu weist die Federklemme aufeinander zu umgebogene Enden auf, die um die innenseitigen Querstege der betreffenden Glieder greifen. Beim Aufspreizen der Trume einer Schleife werden die Federklemmen auseinander-, beim Falten zusammengebogen.

Benachbarte Glieder der aus diesem Dokument bekannten Energieführungskette sind mit unterschiedlichen Winkeln in beiden Richtungen aus ihrer sich längs erstreckenden Position abwinkelbar.

Eine als Kabelstrang ausgebildete Leitungsführungseinrichtung mit in mehrere Schleifen faltbaren Trumen geht aus der CN 204 407 844 U hervor. Das Aufspreizen der Trume einer Schleife gegen eine Rückstellkraft wird hier ebenfalls durch biegbare Blattfedern bewirkt.

Eine faltbare Leitungsführungseinrichtung der eingangs genannten Art ohne eine beim Aufspreizen der Trume eine Rückstellkraft erzeugende Vorrichtung ist aus der DE 298 06 969 U1 bekannt.

Die zwischen den Verbindungsbereichen verlaufenden Trume einer Schleife können gemäß diesem Dokument im Wesentlichen starre Bereiche aufweisen.

Der vorliegenden Erfindung liegt die Aufgabe zugrunde, eine Leitungsführungseinrichtung bereitzustellen, die eine freie Bewegung des beweglichen Anschlussglieds und somit des Verbrauchers über einen größeren Aktionsbereich und sowohl bei Entfernung ihres beweglichen Anschlussgliedes vom ortsfest anordenbaren Anschlussglied als auch bei Annäherung des beweglichen Anschlussglieds an das ortsfest anordenbare Anschlussglied eine besser kontrollierte Bewegung der zwischen den Anschlussgliedern verlaufenden Leitungsführung ermöglicht.

Die Aufgabe wird erfindungsgemäß durch die Merkmalskombination des Anspruchs 1 gelöst.

Aufgrund der durch die vorgesehenen Maßnahmen bewirkten Rückstellkraft zieht sich die Leitungsführungseinrichtung im Bereich ihrer mindestens einer Schleife kontrolliert zusammen, wenn das bewegliche Anschlussglied auf das ortsfest anordenbare Anschlussglied hin in seine mögliche Ausgangslage bewegt wird. Durch eine geeignete Einstellung der Rückstellkraft kann das bewegliche Anschlussglied aus seiner möglichen Ausgangslage vom ortsfest anordenbaren Anschlussglied über einen bestimmten Aktionsbereich des Verbrauchers bewegt werden, wobei die zwischen den beiden Anschlussgliedern angeordnete Leitungsführung ebenfalls kontrolliert durch ein Auffalten bzw. Aufspreizen der Trume bewegt werden kann.

Um die Leitungsführungseinrichtung über einen größeren Aktionsbereich des Verbrauchers kontrolliert zu bewegen, können mehrere, S-förmig aneinander anschließende, wechselseitig verlaufende Schleifen vorgesehen sein, deren Trume gemäß der vorliegenden Erfindung aufspreizbar sind, wobei das dem Verbindungsbereich gegenüberliegende Ende einer ersten Schleife mit dem ortsfest anordenbaren Anschlussglied verbunden ist und das dem Verbindungsbereich gegenüberliegende Ende einer n-ten (n>1) Schleife mit dem beweglichen Anschlussglied verbunden ist.

Bei den S-förmig aneinander anschließenden, wechselseitig verlaufenden Schleifen, die mäanderförmig angeordnet sind, haben unmittelbar aneinander anschließende Schleifen ein gemeinsames Trum.

Der Aufspreizwinkel, über den die Trume einer Schleife beim Verfahren der Leitungsführungseinrichtung aufgrund des biegsamen Verbindungsbereichs aufgeschwenkt werden, kann durch Begrenzungsmittel begrenzt sein. Insbesondere kann der Aufspreizwinkel < 180°, vorzugsweise <160° sein.

Der Verbindungsbereich kann in mindestens einer Ebene relativ zueinander verschwenkbare Glieder aufweisen, die einstückig miteinander gelenkig verbunden oder als separate Glieder mit Gelenkverbindungen ausgebildet sein können.

Die Glieder der Trume können in der Art der Glieder des Verbindungsbereichs ausgebildet sein.

Das mindestens eine elastische Band kann an unmittelbar an den Verbindungsbereich angrenzenden Endbereichen der Trume einer Schleife angreifen. Die Deformation des mindestens einen elastischen Bandes beim Auseinanderspreizen der Trume über einen großen Aufspreizwinkel kann in diesem Falle relativ gering gehalten werden.

Das mindestens eine elastische Band kann bei im Wesentlichen paralleler Anordnung der Trume einer Schleife in einem Winkel zwischen 0° und 45° gegenüber den Trumen verlaufen.

Die Rückstellkraft bei aufgespreizten Trume einer Schleife kann auch dadurch bewirkt werden, dass die Schleife einen Rückstellaktor aufweist, der ansteuerbar ist.

Dazu kann eine relativ zum beweglichen Anschlussglied ortsfest angeordnete Steuereinrichtung dienen, die z.B. am Verbraucher betätigbar ist. Die Steuereinrichtung kann jedoch auch unabhängig vom beweglichen Anschlussglied und dessen Bewegung angeordnet sein.

Die Steuereinrichtung kann einen Kontaktgeber aufweisen, der beim Schließen der Kontakte ein Signal an den Rückstellaktor zu dessen Ansteuerung abgibt. Insbesondere kann die Steuereinrichtung in Signalverbindung mit allen Schleifen der Leitungsführungseinrichtung stehen.

Der Rückstellaktor einer Schleife oder die Rückstellaktoren einiger oder aller Schleifen der Leitungsführungseinrichtung können angesteuert werden, wenn das mit dem Verbraucher verbundene bewegliche Anschlussglied aus einer ausgefahrenen Position in dessen Aktionsbereich zurückgefahren werden soll. Die Leitungsführungseinrichtung kann dann in einen teilweisen zusammengelegten oder gänzlich zusammengelegten Zustand, der die Ausgangsposition des beweglichen Anschlussglieds definiert, zusammengelegt werden.

Die Trume einer Schleife können im Wesentlichen starre Bereiche der Leitungsführungseinrichtung bilden, die sich beim Bewegen des beweglichen Anschlussglieds und der damit erfolgenden Bewegung der Leitungsführungseinrichtung nicht wesentlich biegen.

Die Verschwenkbarkeit der Glieder, die die Trume bilden, kann durch Anschläge blockiert sein.

Die Glieder der Energieführungskette können gekröpft ausgebildet sein mit nach außen (vom Ketteninnenraum hinweg) gekröpften und nach innen (zum Ketteninnenraum hin) gekröpften Bereichen. Dabei liegt der nach außen gekröpfte Bereich einer Seitenlasche an dem nach innen gekröpften Bereich einer anschließenden Seitenlasche in deren Überlappungsbereichen an.

Die Seitenteile der Glieder können alternativ als Innen- und Außenlaschen ausgebildet sein, die wechselseitig in den Seitensträngen der Energieführungskette angeordnet sind. Die Innenseiten der Außenlaschen liegen an den Außenseiten der Innenlaschen in den Überlappungsbereichen der Laschen an.

Die Seitenlaschen derartiger Energieführungsketten können Anschläge aufweisen, die eine Verschwenkung aneinander anschließender Seitenteile über deren im Wesentlichen gestreckte Lage hinaus blockieren. In der gegensinnigen Verschwenkrichtung können Anschläge die Abwinkelung aneinander anschließender Seitenteile begrenzen und den Radius des bogenförmigen Verbindungsbereichs definieren.

Starre Bereiche der Trume einer Schleife können dadurch erreicht werden, dass, ausgehend von einer vorstehend beschriebenen Energieführungskette mit gekröpften Seitenteilen, die doppelte Anschläge in ihren Überlappungsbereichen aufweisen, jedes zweite Seitenteil um dessen mittlere Querachse um 180° gedreht mit den benachbarten, nicht umgedrehten Seitenteilen verbunden wird. Die doppelten Anschläge wirken bei dieser Anordnung einer Abwinkelung der Seitenteile in beiden Richtungen entgegen. Bei einer alternierend aus Innen- und Außenlaschen bestehenden Kette mit ebenfalls doppelten Anschläge in den Überlappungsbereichen können ebenfalls durch Umdrehen der Innenlaschen oder Außenlaschen starre Bereiche der Kette hergestellt werden.

Starre Bereiche der Trume einer Schleife können auch, wenn auch nicht so stabil, dadurch erreicht werden, dass jeweils seitlich gegenüberliegende Seitenteile eines Paares aneinander anschließender Kettenglieder gegensinnig zueinander abwinkelbar sind. So lassen sich zum Beispiel bei einer Kette, deren Glieder abwechselnd aus Innen- und Außenlaschen bestehen, durch umdrehen beispielsweise der Innenlaschen bei einer Kette mit gekröpften Seitenteilen durch umdrehen jeder zweiten Seitenlasche bei einem der seitlich gegenüberliegenden Laschenstränge der Kette gegensinnig zueinander abwinkelbare seitlich gegenüberliegende Seitenteile und somit in ihrer gestreckten Lage starre Ketten oder Kettenabschnitte erreichen. Derartige Kettenabschnitte können die Trume einer Schleife bei einer erfindungsgemäßen Leitungsführungseinrichtung bilden.

Der Verbindungsbereich einer Schleife kann dabei aus dem gleichen Kettengliedern wie die beiden Trume bestehen, indem er einen Abschnitt der Leitungsführungseinrichtung bildet, bei dem die seitlich gegenüberliegenden Seitenteile so angeordnet sind, dass sie gleichsinnig zueinander abwinkelbar sind.

Anstelle einer Konstruktion, die zu starren Trumen an einer Schleife führt, kann eine erfindungsgemäße Leitungsführungseinrichtung auch so ausgebildet sein, dass die Glieder des vom ortsfest anordenbaren Anschlussglied entfernteren Trums einer Schleife Anschläge aufweisen, die ein Verschwenken benachbarter Glieder dieses Trums aus einer gestreckten Anordnung nach außen, d.h. vom gegenüberliegenden Trum der Schleife weg, blockieren, jedoch ein Verschwenken der Glieder aus der gestreckten Lage nach innen, d.h. zum gegenüberliegenden Trum hin, ermöglichen. Auch diese Konstruktion erlaubt in gewissen Maßen ein kontrolliertes Auseinanderspreizen und Zusammenfalten der Trume beim Verfahren des beweglichen Anschlussglieds über einen größeren Aktionsbereich.

Bei der vorstehend beschriebenen Ausbildung einer Energieführungskette können die Seitenteile der Glieder des vom ortsfest anordenbaren Anschlussglied entfernteren Trums einer Schleife so orientiert sein, dass sie ein Verschwenken benachbarter Glieder dieses Trums aus der gestreckten Anordnung nach außen blockieren, während die Seitenteile des vom ortsfest anordenbaren Anschlussglied entfernteren Trums der Schleife so orientiert sind, dass sie ein Verschwenken benachbarter Glieder dieses Trums aus der gestreckten Lage nach innen ermöglichen.

Bei der als Energieführungskette ausgebildeten Leitungsführungseinrichtung, bei der mindestens ein an beiden Trumen einer Schleife angreifendes elastisches Band vorgesehen ist, kann das elastische Band an gegenüberliegenden Querstegen der Trume oder Schmalseiten der Seitenteile der Glieder angreifen.

An den gegenüberliegenden Querstegen bzw. Schmalseiten der Seitenteile, an denen das elastische Band angreift, können Einhängungen angeordnet sein, in die ein endloses elastisches Band eingehängt ist. Die Einhängungen können an die betreffenden Querstege bzw. Schmalseiten der Seitenteile einstückig angeformt oder daran lösbar befestigt sein.

Das elastische Band kann auch in einfacher Weise durch Kabelbinder an den Querstegen selbst, oder den Haltevorrichtungen an den Querstegen oder Seitenteilen befestigt sein.

Erfindungsgemäß kann die Leitungsführungseinrichtung insbesondere auf der Fläche einer Basis verwendet werden, auf der sie gleitend geführt werden kann. Die Fläche der Basis bildet dann den Aktionsbereich, über den hinweg das mit dem Verbraucher verbundene bewegliche Anschlussglied bewegt werden kann. Dabei liegen die Trume und der Verbindungsbereich einer Schleife im Wesentlichen mit einer Seite an der Fläche der Basis an.

Das ortsfest anordenbare Anschlussglied der Leitungsführungseinrichtung kann am Rand der Fläche der Basis angeordnet sein und vorzugsweise so, dass das bewegliche Anschlussglied einen möglichst großen Bereich der Fläche (den Aktionsbereich) erreichen kann.

Allgemein wird die Leitungsführungseinrichtung bei Bewegung des beweglichen Anschlussglieds von einem Ausgangspunkt mit zusammengefalteten Trumen einer Schleife zu einem beliebigen erreichbaren Punkt auf der Fläche hin unter Auseinanderspreizen der Trume einer Schleife und bei Bewegung des beweglichen Anschlussglieds zum Ausgangspunkt zurück unter Zusammenfalten der Trume auf der Fläche der Basis gleitend geführt.

Das ortsfest anordenbare Anschlussglied der Leitungsführungseinrichtung kann auf der Basis befestigt und über eine gelenkige Verbindung mit dem daran anschließenden Trum einer Schleife verschwenkbar verbunden sein.

Ein Ausführungsbeispiel der erfindungsgemäßen Leitungsführungseinrichtung wird im Folgenden anhand der Zeichnung näher beschrieben. In der Zeichnung zeigen:
- Fig. 1: eine Leitungsführungseinrichtung bestehend aus sechs Schleifen in zusammengefalteten Zustand,
- Fig. 2: eine vergrößerte Darstellung des Verbindungsbereichs und daran anschließender Bereiche der Trume der in Fig. 1 gezeigten Leitungsführungseinrichtung,
- Fig. 3a: eine seitlich auf der Fläche einer Basis aufliegende Leitungsführungseinrichtung im zusammengefalteten Zustand (Ausgangspunkt des beweglichen Anschlussglieds),
- Fig. 3b: eine erste teilweise aufgeklappte Position der Leitungsführungseinrichtung, bei der das bewegliche Anschlussglied die untere rechte Ecke der Fläche erreicht,
- Fig. 3c: eine zweite teilweise aufgeklappte Position der Leitungsführungseinrichtung, bei der das bewegliche Anschlussglied die linke untere Ecke der Fläche erreicht,
- Fig. 3d: eine weitgehend aufgeklappte Position der Leitungsführungseinrichtung, bei der das bewegliche Anschlussglied die rechte obere Ecke der Fläche erreicht,
- Fig. 3e: eine weitgehend aufgeklappte Position der Leitungsführungseinrichtung, bei der das bewegliche Anschlussglied die linke obere Ecke der Fläche erreicht,
- Fig. 4a: eine seitlich auf der Fläche einer Basis aufliegende Leitungsführungseinrichtung, bei der das bewegliche Anschlussglied einen Randbereich der Fläche erreicht hat und mit einer Steuerungseinrichtung verbunden ist, die signaltechnich mit Rückstellaktoren in den Verbindungsbereichen der Trume verbunden ist, und
- Fig. 4b: vergrößerte Ansicht des Bereichs X in Fig. 4a.

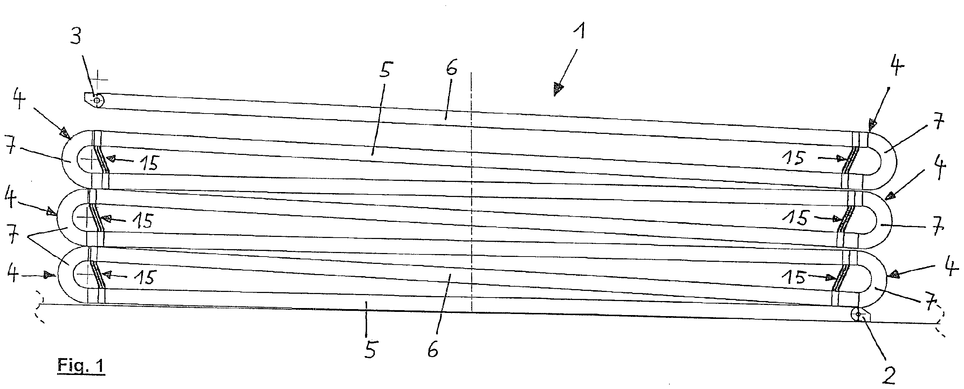

Wie aus Figur 1 hervorgeht, weist die Leitungsführungseinrichtung 1 ein ortsfest anordenbares Anschlussglied 2 und ein bewegliches Anschlussglied 3 auf. Zwischen diesen Anschlussgliedern erstreckt sich die Leitungsführungseinrichtung 1 in einem zusammengefalteten (zusammengelegten) Zustand mäanderförmig in Form mehrerer S-förmig aneinander anschließender wechselseitig verlaufender Schleifen 4. Die Schleifen 4 weisen ein erstes, zum ortsfest anordenbaren Anschlussglied 2 über den Verlauf der Leitungsführungseinrichtung 1 näherliegendes Trum 5 und ein zweites, zum ortsfest anordenbaren Anschlussglied über den Verlauf der Leitungsführungseinrichtung 1 entfernter liegendes Trum 6 auf. Die Trume 5 und 6 sind durch einen bogenförmigen Verbindungsbereich 7 miteinander verbunden.

Zur Aufnahme und Führung von in der Zeichnung nicht dargestellten Energieleitungen zwischen den Anschlussgliedern 2 und 3 weisen die Trume 5 und 6 der Verbindungsbereich 7 einen zwischen den beiden Anschlussgliedern 2 und 3 durchgängigen Raum auf.

Der Verbindungsbereich 7 ist in der Ebene, in der die Trume 5 und 6 angeordnet sind, über einen Aufspreizwinkel >0° biegbar.

Um die Leitungsführungseinrichtung 1 beim Verfahren des beweglichen Anschlussglieds 3 kontrolliert zu bewegen, ist der Verbindungsbereich 7 so ausgebildet, oder eine Vorrichtung vorgesehen, die bewirkt, dass im aufgespreizten Zustand der Trume 5 und 6 durch Aufbiegen der Verbindungsbereiche 7 eine Rückstellkraft erzeugt wird, durch die die Trume 5 und 6 in ihre zusammengefaltete (zusammengelegte) Lage zurückbewegt werden.

Das dem Verbindungsbereich gegenüberliegende Ende einer ersten Schleife ist mit dem ortsfest anordenbaren Anschlussglied 2 und das dem Verbindungsbereich 7 gegenüberliegenden Ende der sechsten Schleife mit dem beweglichen Anschlussglied 3 verbunden.

Das ortsfest anordenbare Anschlussglied 2 ist verschwenkbar mit dem daran anschließendem Trum 5 verbunden.

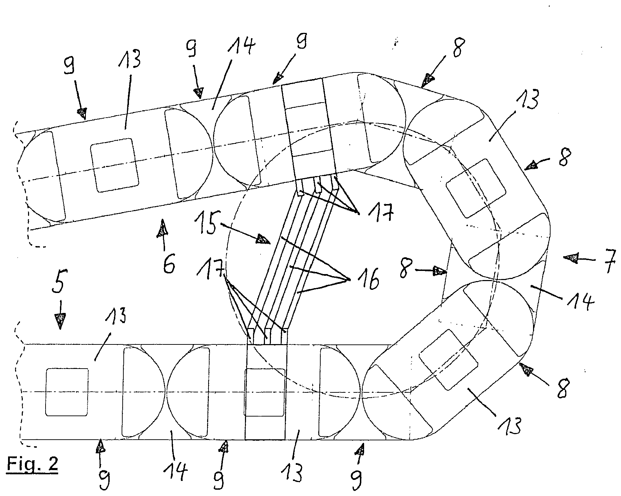

Der Verbindungsbereich 7 weist in der Ebene, in der die Trume 5 und 6 angeordnet sind, relativ zueinander verschwenkbare Glieder 8 auf, die als separate Glieder 8 mit Gelenkverbindungen ausgebildet sind. Wie in Figur 2 gezeigt ist, weisen die Trume 5 und 6 ebenfalls Glieder 9 in der Art der Glieder 8 des Verbindungsbereich auf.

Während die Glieder 8 des Verbindungsbereichs 7 und die unmittelbar benachbarten Glieder 9 der Trume 5 und 6 über einen bestimmten Winkel in Biegerichtung des Verbindungsbereichs 7 abwinkelbar sind, sind die Glieder 9 der Trume 5 und 6 in der in Figur 2 gezeigten gestreckten Lage gegen Abwinkelung in beiden Schwenkrichtungen blockiert. Beim Aufbiegen des Verbindungsbereichs 7 werden die Glieder 9 in Richtung auf ihre gestreckte Lage bis zu einem maximalen Verschwenkwinkel zwischen ihren Längsrichtungen verschwenkt. Der maximale Winkel ist < 180°, beispielsweise 160°.

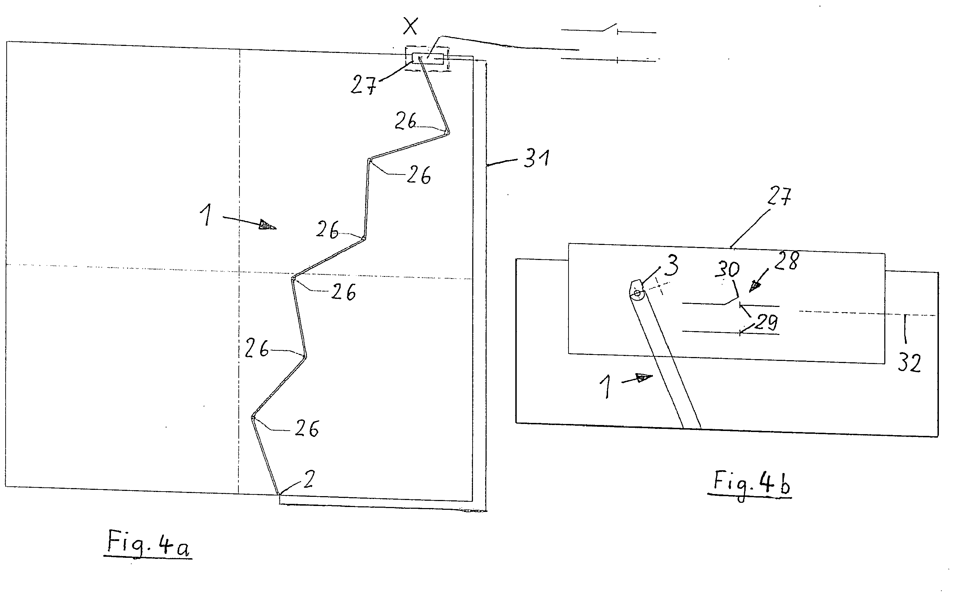

Insgesamt ist die Leitungsführungseinrichtung 1 als Energieführungskette ausgebildet, deren Glieder 8 und 9 jeweils zwei gegenüberliegende Seitenteile 10 und 11(Fig. 4b, 5b) aufweisen, die durch Querstege 12 miteinander verbunden sind. Die Seitenteile sind, wie aus Figur 2 hervorgeht aus alternierend angeordneten Außenlaschen 13 und in den Figuren schematisch dargestellten Innenlaschen 14 ausgebildet. Die Innenseiten der Außenlaschen 13 liegen an den Außenseiten der Innenlaschen 14 in deren Überlappungsbereichen an und sind in diesen Überlappungsbereichen durch in der Zeichnung nicht dargestellte Gelenkverbindungen schwenkbar gelagert. Die Seitenteile 10 und 11 weisen in der Zeichnung nicht dargestellte doppelte Anschläge auf, die eine Verschwenkung aneinander anschließender Seitenteile über deren im Wesentlichen gestreckte Lage hinaus blockieren. In der gegensinnigen Verschwenkrichtung begrenzen die doppelten Anschläge die Abwinkelung aneinander anschließender Seitenteile 10 und 11 und definieren somit den Radius des bogenförmigen Verbindungsbereichs 7.

Während die Seitenteile 10 und 11 der Glieder 8 des Verbindungsbereichs und der unmittelbar daran anschließenden Glieder 9 der Trume 5 und 6 in der vorgenannten Weise verschwenkbar sind, wird eine starre Anordnung der Trume 5 und 6 dadurch erreicht, dass die Seitenteile 10 und 11 jedes zweiten Gliedes 9 gegenüber deren Anordnung im Verbindungsbereich 7 um 180° um die mittlere Querachse gedreht sind. Durch die doppelten Anschläge wird in dieser Position eine Verschwenkung der Seitenteile 10 und 11 der Glieder 9in beiden Richtungen blockiert.

Bei dem in Figur 2 gezeigten Ausführungsbeispiel wird die Rückstellkraft beim Aufspreizen der beiden Trume 5 und 6 einer Schleife 4 dadurch erzeugt, dass ein an beiden Trumen 5 und 6 angreifendes elastisches Element 15 vorgesehen ist, das beim Aufspreizen der Trume 5 und 6 aus der in den Figuren 1 und 2 gezeigten, im Wesentlichen parallelen Anordnung eine Rückstellkraft auf die Trume 5 und 6 ausübt. Das elastische Element 15 weist drei elastische Bänder 16 auf, die an Halteeinrichtungen 17, die an gegenüberliegenden Seiten der an den Verbindungsbereich 7 anschließenden Glieder 9 der Trume befestigt sind.

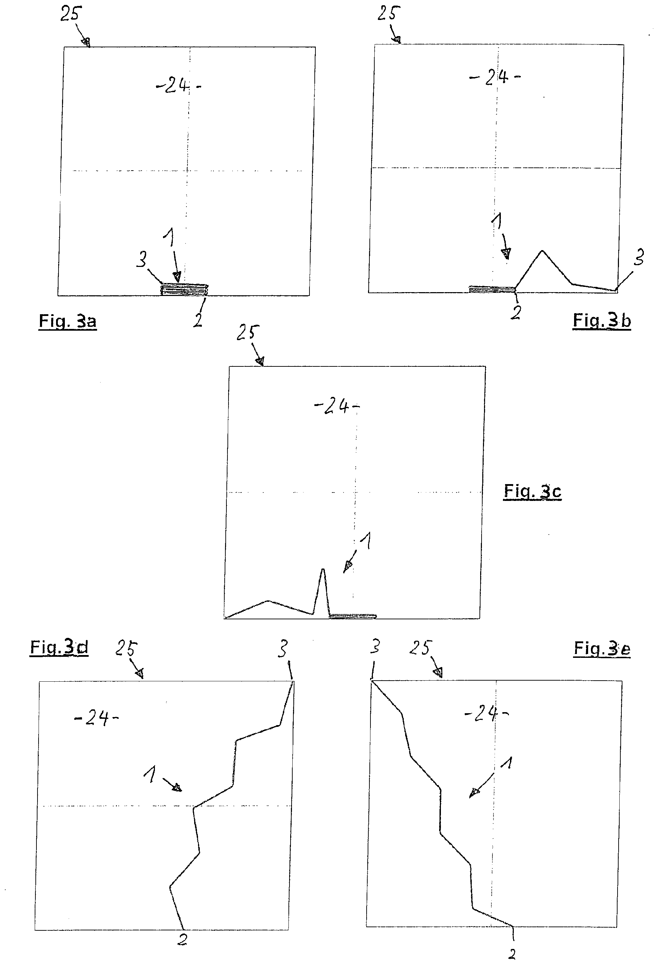

Die Figuren 3a-3e zeigen verschiedene Stellungen der Leitungsführungseinrichtung 1 bezüglich der Fläche 24 einer Basis 25. Es handelt sich hier um eine ebene Fläche 24, auf der die Leitungsführungseinrichtung 1 gleitend geführt werden kann. Die Fläche 24 der Basis 25 bildet dann den Aktionsbereich, über den hinweg das mit dem Verbraucher verbundene bewegliche Anschlussglied 3 bewegt werden kann. Dabei liegen die Trume 5 und 6 und der Verbindungsbereich 7 einer Schleife 4 mit einer Seite an der Fläche 24 der Basis 25 an.

Bei der als Energieführungskette ausgebildeten Leitungsführungseinrichtung 1 mit kastenförmigen Gliedern 8 und 9, die Seitenteile 10 und 11 aufweisen, liegen die Glieder 8 und 9 seitlich mit den Seitenteilen 10 an der Fläche 24 der Basis 25 an und werden auf dieser Fläche gleitend geführt.

Figur 3a zeigt die auf der Fläche 24 seitlich liegende Leitungsführungseinrichtung 1 in dem in Figur 1 dargestellten Zustand. Dieser zusammengeklappte (zusammengelegte) Zustand definiert den Ausgangspunkt des beweglichen Anschlussgliedes 3. Das ortsfest anordenbare Anschlussglied 2 ist in der Figur 3a gezeigten Position fest am Rand der Fläche 24 angeordnet.

Figur 3b zeigt die Leitungsführungseinrichtung 1 in einem teilweise aufgeklappten Zustand, bei dem das bewegliche Anschlussglied 3 zur rechts unten liegenden Ecke der Fläche 24 geführt ist. Wie aus der Figur 3b hervorgeht, sind die Trume der drei an das bewegliche Anschlussglied 3 anschließenden Schleifen 4 aufgespreizt. Die Mittel zur Erzeugung einer Rückstellkraft aus diesen aufgespreizten Positionen sind in den Figuren 3a-3e der Einfachheit halber nicht dargestellt.

Figur 3c zeigt eine Lage der Leitungsführungseinrichtung 1, in der das bewegliche Anschlussglied 3 zu der links unten liegenden Ecke der Fläche 24 bewegt worden ist. Hierbei sind die letzten vier Schleifen 4 der Leitungsführungseinrichtung 1 aufgespreizt.

Die Figuren 3d und 3e zeigen Lagen der Leitungsführungseinrichtung 1, bei denen das bewegliche Anschlussglied 3 zur rechts oben bzw. links oben liegenden Ecke der Fläche 24 der Basis 25 geführt ist. In diesen Lagen sind alle sechs Schleifen 4 der Leitungsführungseinrichtung 1 aufgespreizt.

Figur 4a zeigt eine auf der Fläche 24 einer Basis 25 seitlich gleitend geführte Leitungsführungseinrichtung, bei der das mit dem (in der Zeichnung nicht dargestellten) Verbraucher verbundene bewegliche Anschlussglied 3 wiederum eine Endposition an dem ortsfest anordenbaren Anschlussglied 2 gegenüberliegenden Rand der Fläche 24 erreicht hat. Beim Verfahren der Leitungsführungseinrichtung 1 in diese Position wird keine Rückstellkraft zwischen den Trumen der einzelnen Schleifen erzeugt. Vielmehr sind Rückstellaktoren 26 vorgesehen, die durch eine Steuereinrichtung 27 ansteuerbar sind und im angesteuerten Zustand eine Rückstellkraft zum Zusammenfalten (Zusammenlegen) der Trume 5 und 6 der Schleifen 4 bewirken. In dem in Figur 4a gezeigten Ausführungsbeispiel ist die Steuereinrichtung 27 ortsfest zu dem beweglichen Anschlussglied 3 angeordnet. Sie weist einen Kontaktgeber 28 auf, der beim Schließen der Kontakte 29 und 30 über eine durch die Leitungsführungseinrichtung 1 verlaufende Signalverbindung 31 (die in Figur 4a schematisch dargestellt ist) die Rückstellaktoren 26 ansteuert. Figur 4b zeigt eine vergrößerte Darstellung des Bereichs X in Figur 4a, die schematisch die im vorliegenden Ausführungsbeispiel ortsfest zum beweglichen Anschlussglied 3 angeordnete Steuereinrichtung 27 mit Kontaktgeber 28 und dem Signalausgang 32 zeigt.

Die Aktoren können weiterhin so ausgebildet sein, dass sie außer dem Zusammenfalten (Zusammenlegen) der Trume 5 und 6 auch deren Aufspreizen (ebenfalls angesteuert durch die Steuereinrichtung) bewirken.

### Bezugszeichenliste

- 1: Leitungsführungseinrichtung
- 2: Anschlussglied
- 3: Anschlussglied
- 4: Schleife
- 5: Trum
- 6: Trum
- 7: Verbindungsbereich
- 8: Glied
- 9: Glied
- 10: Seitenteil
- 11: Seitenteil
- 12: Quersteg
- 13: Außenlasche
- 14: Innenlasche
- 15: elastisches Element
- 16: elastisches Band
- 17: Halteeinrichtung
- 24: Fläche
- 25: Basis
- 26: Rückstellaktor
- 27: Steuereinrichtung
- 28: Kontaktgeber
- 29: Kontakt
- 30: Kontakt
- 31: Signalverbindung
- 32: Signalausgang

## Patentansprüche

1. Leitungsführungseinrichtung (1), die als Energieführungskette zur Aufnahme und Führung von Energieleitungen zwischen einem ortsfest anordenbaren Anschlussglied (2) und einem beweglichen Anschlussglied ausgebildet ist, deren Glieder (8, 9) jeweils zwei gegenüberliegende Seitenteile (10, 11) aufweisen, die bei zumindest einigen der Glieder (8, 9) durch Querstege (12) miteinander verbunden sind, wobei sich anschließende Seitenteile unmittelbar benachbarter Glieder (8, 9) Gelenkverbindungen aufweisen, und wobei die Energieführungskette mindestens eine Schleife bildend anordenbar ist, wobei die Schleife (4) ein erstes, zum ortsfest anordenbaren Anschlussglied über den Verlauf der Leitungsführungseinrichtung näher liegendes Trum (5) und ein zweites, zum ortsfest anordenbaren Anschlussglied (2) über den Verlauf der Leitungsführungseinrichtung entfernter liegendes Trum (6) aufweist, die durch einen bogenförmigen Verbindungsbereich (7) miteinander verbunden sind, wobei die Trume (5, 6) und der Verbindungsbereich einen zwischen den beiden Anschlussgliedern durchgängigen Raum zur Aufnahme der Energieleitungen aufweisen und der Verbindungsbereich zumindest in der Ebene, in der die Trume angeordnet sind, über einen Aufspreizwinkel > 0° biegbar ist, wobei der Verbindungsbereich (7) so ausgebildet ist oder dass eine Vorrichtung vorgesehen ist, die bewirkt, dass im aufgespreizten Zustand der Trume (5, 6), bei dem der Verbindungsbereich (7) aufgebogen ist, eine Rückstellkraft erzeugt wird, durch die die Trume (5, 6) in ihre zusammengefaltete Lage zurückbewegbar sind, **dadurch gekennzeichnet, dass** die Trume (5, 6) einer Schleife (4) starre Bereiche aufweisen, die sich beim Bewegen des beweglichen Anschlussglieds (3) und der damit erfolgten Bewegung der Leitungsführungseinrichtung (1) nicht wesentlich biegen oder die Glieder (9) des vom ortsfest anordenbaren Anschlussglied (2) entfernteren Trums (5, 6) einer Schleife (4) Anschläge aufweisen, die ein Verschwenken benachbarter Glieder (9) dieses Trums (5, 6) aus einer gestreckten Anordnung nach außen, d.h. vom gegenüberliegenden Trum der Schleife (4) weg, blockieren, jedoch ein Verschwenken der Glieder (9) aus der gestreckten Lage nach innen, d.h. zum gegenüberliegenden Trum hin, ermöglichen, wobei zur Erzeugung der Rückstellkraft mindestens ein an gegenüberliegenden Seiten der Trume (5, 6) einer Schleife (4) angreifendes elastisches Band (16) vorgesehen ist, das beim Aufspreizen aus einer im Wesentlichen parallelen oder einer sich mit dem vom Verbindungsbereich (7) entfernt liegenden Ende berührenden Anordnung der Trume (5, 6) eine Rückstellkraft auf die Trume (5, 6) ausübt, oder wobei zur Erzeugung der Rückstellkraft ein Rückstellaktor (26) im Bereich des Verbindungsbereichs (7) oder der Trume (5, 6) einer Schleife (4) vorgesehen ist, der durch eine Steuereinrichtung (27) ansteuerbar ist und durch den im angesteuerten Zustand eine Rückstellkraft auf die aufgespreizten Trume (5, 6) ausübbar ist.

2. Leitungsführungseinrichtung (1), nach Anspruch 1, **dadurch gekennzeichnet, dass** mehrere, S-förmig aneinander anschließende, wechselseitig verlaufende Schleifen (4) vorgesehen sind, deren Trume (5, 6) aufspreizbar sind, wobei das dem Verbindungsbereich (7) gegenüberliegende Ende einer ersten Schleife (4) mit dem ortsfest anordenbaren Anschlussglied (2) verbunden ist und das dem Verbindungsbereich gegenüberliegende Ende einer n-ten (n>1) Schleife (4) mit dem beweglichen Anschlussglied (3) verbunden ist.

3. Leitungsführungseinrichtung (1) nach Anspruch 1 oder 2, **dadurch gekennzeichnet, dass** der Aufspreizwinkel, über den die Trume (5, 6) einer Schleife (4) beim Verfahren der Leitungsführungseinrichtung (1) aufgrund des biegsamen Verbindungsbereichs (7) aufschwenkbar sind, durch Begrenzungsmittel auf < 180°, vorzugsweise < 160° begrenzt ist.

4. Leitungsführungseinrichtung (1) nach einem der Ansprüche 1 bis 3, **dadurch gekennzeichnet, dass** die mindestens in einer Ebene verschwenkbaren Glieder (8) des Verbindungsbereichs (7) einstückig miteinander gelenkig verbunden oder als separate Glieder (8) mit Gelenkverbindungen ausgebildet sind und dass die Glieder (9) der Trume (5, 6) in der Art der Glieder (8) des Verbindungsbereichs (7) ausgebildet sind.

5. Leitungsführungseinrichtung (1) nach einem der Ansprüche 1 bis 4, wobei wobei mindestens ein an gegenüberliegenden Seiten der Trume (5, 6) einer Schleife (4) angreifendes elastisches Band (16) vorgesehen ist, das beim Aufspreizen aus einer im Wesentlichen parallelen oder einer sich mit dem vom Verbindungsbereich (7) entfernt liegenden Ende berührenden Anordnung der Trume (5, 6) eine Rückstellkraft auf die Trume (5, 6) ausübt **dadurch gekennzeichnet, dass** das mindestens eine elastische Band (16) an Endbereichen der Trume (5, 6) einer Schleife (4) angreift, die an den Verbindungsbereich (7) angrenzen.

6. Leitungsführungseinrichtung (1) nach einem der Ansprüche 1 bis 5, wobei die Glieder (9) des vom ortsfest anordenbaren Anschlussglied (2) entfernteren Trums (5, 6) einer Schleife (4) Anschläge aufweisen, die ein Verschwenken benachbarter Glieder (9) dieses Trums (5, 6) aus einer gestreckten Anordnung nach außen, d.h. vom gegenüberliegenden Trum der Schleife (4) weg, blockieren, jedoch ein Verschwenken der Glieder (9) aus der gestreckten Lage nach innen, d.h. zum gegenüberliegenden Trum hin, ermöglichen, **dadurch gekennzeichnet, dass** die Seitenteile (10, 11) der Glieder (9) des vom ortsfest anordenbaren Anschlussglied (2) entfernteren Trums (5, 6) einer Schleife (4) so orientiert sind, dass sie ein Verschwenken benachbarter Glieder (9) dieses Trums aus der gestreckten Anordnung nach außen blockieren, während die Seitenteile (10, 11) des vom ortsfest anordenbaren Anschlussglied (2) entfernteren Trums (8, 9) der Schleife (4) so orientiert sind, dass sie ein Verschwenken benachbarter Glieder (9) des Trums aus der gestreckten Lage nach innen ermöglichen.

7. Leitungsführungseinrichtung (1) nach einem der Ansprüche 1 bis 6 und Basis (25) zur gleitenden Führung der Leitungsführungseinrichtung (1), wobei die Basis (25) eine Fläche (24) aufweist, auf der die Leitungsführungseinrichtung (1) bei Bewegung des beweglichen Anschlussgliedes (3) von einem Ausgangspunkt mit zusammengefalteten Trumen (5, 6) einer Schleife (4) zu einem beliebigen erreichbaren Punkt auf der Fläche (24) hin unter Auseinanderspreizen der Trume (5, 6) und bei Bewegung des beweglichen Anschlussgliedes (3) zum Ausgangspunkt zurück unter Zusammenfalten der Trume (5, 6) gleitend führbar ist.

8. Leitungsführungseinrichtung (1) und Basis (25) nach Anspruch 7, **dadurch gekennzeichnet, dass** die Trume (5, 6) und der Verbindungsbereich (7) einer Schleife (4) im Wesentlichen mit einer Seite an der Fläche (24) der Basis (25) anliegt.

9. Leitungsführungseinrichtung (1) und Basis (25) nach Anspruch 7 oder 8, **dadurch gekennzeichnet, dass** das ortsfest anordenbare Anschlussglied (2) am Rand der Fläche (24) der Basis (25) angeordnet ist, vorzugsweise so, dass das bewegliche Anschlussglied (3) einen möglichst großen Bereich der Fläche (24) erreichen kann.

## Claims

1. A line guiding device (1) which is provided as energy guiding chain (1) for receiving and guiding energy lines between a connecting member (2) which can be arranged stationarily and a movable connecting member, the members (8, 9) of which chain respectively have two oppositely disposed side portions (10, 11) which are connected together by transverse limbs (12) in at least some of the members (8, 9), wherein adjoining side portions of directly adjacent members (8, 9) have joint connections, and which chain can be arranged to form at least one loop (3), wherein the loop (4) has a first run (5) which is closer to the connecting member which can be arranged stationarily over the course of the line guiding device and a second run (6) which is more remote in relation to the connecting member (2) which can be arranged stationarily over the course of the line guiding device, which runs are connected together by an arcuate connecting region (7), wherein the runs (5, 6) and the connecting region have a space which is continuous between the two connecting members for receiving the energy lines and the connecting region is bendable at least in the plane in which the runs are arranged over a spread angle (> 0°), wherein the connecting region (7) is so designed or there is provided a device which causes a restoring force to be produced in the spread-open state of the runs (5, 6), in which the connecting region is bent open, the runs (5, 6) being moved back into their folded-together position by the restoring force, **characterised in that** the runs (5, 6) of a loop (4) have rigid regions which do not substantially bend upon the movement of the movable connecting member (3) and the movement that occurs therewith of the line guiding device (1) or the members (9) of the run (5, 6) of a loop (4), that is more remote from the connecting member (2) which can be arranged stationarily, have abutments which block a pivotal movement of adjacent members (9) of said run (5, 6) outwardly out of a straight arrangement, that is to say away from the oppositely disposed run of the loop (4), but permit a pivotal movement of the members (9) inwardly out of the straight position, that is to say towards the oppositely disposed run, wherein for causing the restoring force at least one elastic band (16) that engages with opposing sides of the runs (5, 6) of a loop (4) is provided and which applies a restoring force to the runs (5, 6) when spread out from a substantially parallel arrangement of the runs (5, 6) or an arrangement touching the end remote from the connecting region (7), or wherein in the region of the connecting region (7) or the runs (5, 6) of a loop (4) a restoring actuator (26) is provided which is controllable by a control device (27) and by which a restoring force can be exerted on the spread-open runs (5, 6) in the actuated state of the actuator.

2. A line guiding device (1) as set forth in claim 1 **characterised in that** there are provided a plurality of loops (4) which adjoin each other in an S-shape and which extend alternately and the runs (5, 6) of which can be spread open, wherein the end of a first loop (4), that is opposite to the connecting region (7), is connected to the connecting member (2) which can be arranged stationarily, and the end of a n-th (n >1) loop (4), that is opposite to the connecting region, is connected to the movable connecting member (3).

3. A line guiding device (1) as set forth in one of claims 1 through 2, **characterised in that** the spread angle over which the runs (5, 6) of a loop (4) can be pivoted open upon displacement of the line guiding device (1) by virtue of the flexible connecting region (7) is limited by limiting means to < 180°, preferably < 160°.

4. A line guiding device (1) as set forth in one of claims 1 through 3, **characterised in that** the members (8) of the connecting region (7), which are pivotable in at least one plane, are connected to one another in one piece in an articulated manner or are formed as separate members (8) with articulated connections, and **in that** the members (9) of the runs (5, 6) are formed in the same way as the members (8) of the connecting region (7).

5. A line guiding device (1) as set forth in one of claims 1 through 4, wherein at least one elastic band (16) engaging oppositely disposed sides of the runs (5, 6) of a loop (4) is provided, which exerts a restoring force on the runs (5, 6) upon spreading from an arrangement of the runs (5, 6), that is substantially parallel, or an arrangement that contacts the end disposed remote from the connecting region (7), **characterised in that** the at least one elastic band (16) engages end regions of the runs (5, 6) of a loop (4), that adjoin the connecting region (7).

6. A line guiding device (1) as set forth in one of claims 1 through 5 the members (9) of the run (5, 6) of a loop (4), that is more remote from the connecting member (2) which can be arranged stationarily, have abutments which block a pivotal movement of adjacent members (9) of said run (5, 6) outwardly out of a straight arrangement, that is to say away from the oppositely disposed run of the loop (4), but permit a pivotal movement of the members (9) inwardly out of the straight position, that is to say towards the oppositely disposed run, **characterised in that** the side portions (10, 11) of the members (9) of the run (5, 6) of a loop (4), that is more remote from the connecting member (2) which can be arranged stationarily, are so oriented that they block a pivotal movement of adjacent members (6) of said run outwardly out of the straight arrangement while the side portions (10, 11) of the run (8, 9) of the loop (4), that is more remote from the connecting member (2) which can be arranged stationarily, are so oriented that they permit a pivotal movement of adjacent members (9) of the run inwardly out of the straight position.

7. A line guiding device (1) as set forth in one of claims 1 through 6 and base (25) for sliding guidance of the energy guiding chain (1), wherein the base (25) has a surface (24) on which the line guiding device (1) can be slidingly guided upon movement of the movable connecting member (3) from a starting point with folded-together runs (5, 6) of a loop (4) towards any point which can be reached on the surface (24) with the runs (5, 6) being spread apart and upon movement of the movable connecting member (3) back to the starting point with the runs (5, 6) being folded together.

8. A line guiding device (1) and base (25) as set forth in claim 7 **characterised in that** the runs (5, 6) and the connecting region (7) of a loop (4) bear substantially with a side against the surface (24) of the base (25).

9. A line guiding device (1) and base (25) as set forth in claim 7 or claim 8 **characterised in that** the connecting member (2) which can be arranged stationarily is arranged at the edge of the surface (24) of the base (25), preferably in such a way that the movable connecting member (3) can reach a region that is as large as possible of the surface (24).

## Revendications

1. Dispositif de guidage de lignes de transport d'énergie (1), qui est conçu comme une chaîne de guidage d'énergie pour recevoir et guider des lignes d'énergie entre un élément de raccordement (2) pouvant être disposé de manière fixe et un élément de raccordement mobile, dont les maillons (8, 9) présentent chacun deux parties latérales (10, 11) opposées qui sont reliées entre elles par des entretoises transversales (12) pour au moins certains des maillons (8, 9), les parties latérales adjacentes de maillons (8, 9) directement voisins présentant des liaisons articulées et la chaîne de guidage d'énergie pouvant être disposée de manière à former au moins une boucle, la boucle (4) comprenant un premier brin (5) situé plus proche de l'élément de raccordement pouvant être disposé de manière fixe sur le parcours du dispositif de guidage de lignes de transport d'énergie et un deuxième brin (6) situé plus éloigné de l'élément de raccordement (2) pouvant être disposé de manière fixe sur le parcours du dispositif guidage de lignes de transport d'énergie, brins qui sont reliés l'un à l'autre par une zone de liaison (7) en forme d'arc, les brins (5, 6) et la zone de liaison présentant un espace continu entre les deux éléments de raccordement pour recevoir les lignes d'énergie et la zone de liaison pouvant être pliée sur un angle d'écartement > 0° au moins dans le plan où sont disposés les brins, la zone de liaison (7) étant réalisée de telle sorte ou un dispositif étant prévu qui a pour effet qu'à l'état écarté des brins (5, 6), dans lequel la zone de liaison (7) est dépliée, une force de rappel est générée, par laquelle les brins (5, 6) peuvent être ramenés dans leur position repliée, **caractérisé en ce que** les brins (5, 6) d'une boucle (4) présentent des zones rigides qui ne se courbent pas sensiblement lors du déplacement de l'élément de raccordement mobile (3) et du déplacement ainsi effectué du dispositif de guidage de lignes de transport d'énergie (1), ou **en ce que** les maillons (9) du brin (5, 6) d'une boucle (4) éloigné de l'élément de raccordement (2) pouvant être disposé de manière fixe présentent des butées qui empêchent un pivotement de maillons (9) voisins de ce brin (5, 6) vers l'extérieur à partir d'une disposition étirée, c'est-à-dire en s'éloignant du brin opposé de la boucle (4), mais permettent aux maillons (9) de pivoter vers l'intérieur à partir de la position étirée, c'est-à-dire vers le brin opposé, au moins une bande élastique (16) qui agit sur les côtés opposés des brins (5, 6) d'une boucle (4) étant prévue pour générer la force de rappel, bande qui exerce une force de rappel sur les brins (5, 6) lors de l'écartement à partir d'une disposition des brins (5, 6) sensiblement parallèle ou en contact avec l'extrémité éloignée de la zone de liaison (7), ou un actionneur de rappel (26) pour générer la force de rappel étant prévu, dans la zone de liaison (7) ou des brins (5, 6) d'une boucle (4), actionneur de rappel (26) qui peut être commandé par un dispositif de commande (27) et par lequel, à l'état commandé, une force de rappel peut être exercée sur les brins (5, 6) écartés.

2. Dispositif de guidage de lignes (1) selon la revendication 1, **caractérisé en ce que** plusieurs boucles (4) son prévues se raccordant les unes aux autres en forme de S et s'étendant en alternance, dont les brins (5, 6) peuvent être écartés, l'extrémité d'une première boucle (4) opposée à la zone de liaison étant reliée à l'élément de raccordement (2) pouvant être disposé de manière fixe et l'extrémité d'une n-ième (n>1) boucle (4) opposée à la zone de liaison étant reliée à l'élément de raccordement mobile (3).

3. Dispositif de guidage de lignes (1) selon la revendication 1 ou 2, **caractérisé en ce que** l'angle d'écartement, sur lequel les brins (5, 6) d'une boucle (4) peuvent être pivotés lors du déplacement du dispositif de guidage de lignes (1) en raison de la zone de liaison (7) flexible, est limité par des moyens de limitation à < 180°, de préférence < 160°.

4. Dispositif de guidage de lignes (1) selon l'une quelconque des revendications 1 à 3, **caractérisé en ce que** les maillons (8) de la zone de liaison (7), qui peuvent pivoter au moins dans un plan, sont reliés entre eux de manière articulée d'un seul tenant ou sont réalisés sous la forme de maillons séparés (8) avec des liaisons articulées, et **en ce que** les maillons (9) des brins (5, 6) sont réalisés à la manière des maillons (8) de la zone de liaison (7).

5. Dispositif de guidage de lignes (1) selon l'une quelconque des revendications 1 à 4, dans lequel au moins une bande élastique (16) qui s'engage sur des côtés opposés des brins (5, 6) d'une boucle (4) est prévue qui, lors de l'écartement à partir d'une disposition des brins (5, 6) sensiblement parallèle ou en contact avec l'extrémité située à distance de la zone de liaison (7), exerce une force de rappel sur les brins (5, 6), **caractérisé en ce que** ladite au moins une bande élastique (16) s'engage sur des zones d'extrémité des brins (5, 6) d'une boucle (4) qui est adjacente à la zone de liaison (7) .

6. Dispositif de guidage de lignes (1) selon l'une quelconque des revendications 1 à 5, dans lequel les maillons (9) du brin (5, 6) d'une boucle (4) le plus éloigné de l'élément de raccordement (2) pouvant être disposé de manière fixe présentent des butées qui bloquent le pivotement de maillons (9) voisins de ce brin (5, 6) vers l'extérieur, c'est-à-dire en s'éloignant du brin opposé de la boucle (4), à partir d'une disposition étirée, mais qui permettent un pivotement des maillons (9) vers le brin opposé, **caractérisé en ce que** les parties latérales (10, 11) des maillons (9) du brin (5, 6) d'une boucle (4) éloigné de l'élément de raccordement (2) pouvant être disposé de manière fixe sont orientées de telle sorte qu'elles bloquent un pivotement des maillons (9) voisins de ce brin vers l'extérieur à partir de la disposition étirée, tandis que les parties latérales (10, 11) du brin (8, 9) de la boucle (4) éloigné de l'élément de raccordement (2) pouvant être disposé de manière fixe sont orientées de manière à permettre un pivotement vers l'intérieur de maillons (9) voisins du brin à partir de la position étirée.

7. Dispositif de guidage de lignes (1) selon l'une quelconque des revendications 1 à 6 et base (25) pour le guidage coulissant du dispositif de guidage de lignes (1), la base (25) présentant une surface (24) sur laquelle le dispositif de guidage de ligne (1) peut être guidé de manière coulissante lors du déplacement de l'élément de raccordement mobile (3) depuis un point de départ avec des brins repliés (5, 6) d'une boucle (4) vers n'importe quel point accessible sur la surface (24), sous l'écartement des brins (5, 6), et lors du déplacement de retour de l'élément de raccordement mobile (3) vers le point de départ, repliant les brins (5, 6).

8. Dispositif de guidage de lignes (1) et base (25) selon la revendication 7, **caractérisé en ce que** les brins (5, 6) et la zone de liaison (7) d'une boucle (4) reposent essentiellement par un côté sur la surface (24) de la base (25).

9. Dispositif de guidage de lignes (1) et base (25) selon la revendication 7 ou 8, **caractérisé en ce que** l'élément de raccordement (2) pouvant être disposé de manière fixe est disposé au bord de la surface (24) de la base (25), de préférence de telle sorte que l'élément de raccordement mobile (3) puisse atteindre une zone aussi grande que possible de la surface (24).
